# EUROPEAN PATENT SPECIFICATION

(11) **EP 0 840 710 B1**
(45) Date of publication and mention of the grant of the patent: **27.03.2002**
(21) Application number: 96926041.3
(22) Date of filing: 26.07.1996
(51) Int. Cl.: C01F 11/18, B01J 10/00, B01J 19/00, B01J 19/18

(54) **CONTINUOUS PRECIPITATED CALCIUM CARBONATE PRODUCTION EQUIPMENT**
VORRICHTUNG FÜR DIE KONTINUIERLICHE PRODUKTION VON AUSGEFÄLLTEM CALCIUMCARBONAT
INSTALLATION POUR LA PRODUCTION EN CONTINU DE CARBONATE DE CALCIUM PRECIPITE

(30) Priority: 26.07.1995 SI 9500237
(43) Date of publication of application: 13.05.1998
(73) Proprietor: OMYA GmbH, 9722 Gummern (AT)
(72) Inventor: KOGEJ, Dusan, 1260 Ljubljana (SI); SMREKAR, Srecko, 1260 Ljubljana (SI)
(74) Representative: Patent- und Rechtsanwaltssozietät, Maucher, Börjes & Kollegen
(86) International application number: SI9600017
(87) International publication number: WO9705061

(56) References cited:
- US-A- 2 058 503
- CHEMICAL ABSTRACTS, vol. 94, no. 22, 1 June 1981 Columbus, Ohio, US; abstract no. 177430, LAINE: "manufacture of precipitated calcium carbonate" XP002023879 & PAP.PUU, vol. 62, no. 11, 1980, FINLAND, pages 725-734,
- DATABASE WPI Section Ch, Week 9440 Derwent Publications Ltd., London, GB; Class E33, AN 94-319352 XP002023881 & JP,A,06 242 292 (ISHIKAWAJIMA HARIMA HEAVY IND) , 2 September 1994
- CHEMICAL ABSTRACTS, vol. 96, no. 4, 25 January 1982 Columbus, Ohio, US; abstract no. 21988a, LAINE: "method and apparatus for preparing calcium carbonate" page 114; XP002023880 & FI,A,60 183 (OSAKEYHTIO TAMPELLA)

## Description

The invention refers to the equipment designed for continuous production of precipitated calcium carbonate from low concentration lime milk provided for introduction of flue gases with CO₂ content. The invention has been classified into C 01F 11/18 class of the international Patent Classification.

The technical problem successfully solved by the equipment in question involves continuous production of precipitated calcium carbonate according to an environment friendly technological procedure free of any waste production.

There have been known calcium carbonate production procedures, such as described in the American patent document US 4,793,985 and/or in the EP document 369 650, which, however, do not allow for continuous calcium carbonate production. US-2,058,503 also discloses calcium carbonate production.

The continuous precipitated calcium carbonate production equipment referred to in this invention will be described with reference to the concrete example and the enclosed drawing showing:

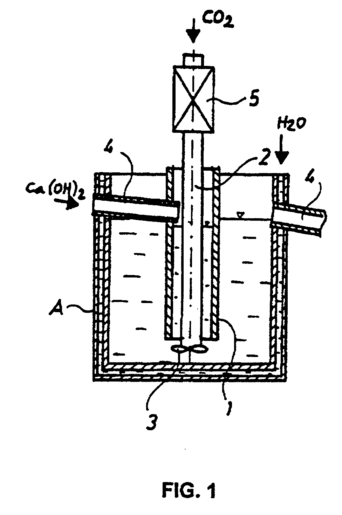

- **Figure 1**: Reaction cell cross-section chart

The precipitated calcium carbonate production takes place in the equipment referred to in this invention, which consists of a series of reaction cells provided for continuous introduction of flue gases with CO₂ content into the low concentration lime milk.

At addition of appropriate quantities of CO₂ to calcium oxide CaO there develops calcium carbonate CaCO₃ in the way that 56 mass particles of crushed calcium oxide CaO are quenched and 18 mass particles of water added to result in 74 mass particles of calcium hydrate Ca(OH)₂. By the addition of 44 mass particles of CO₂ we get 100 mass particles of calcium carbonate CaCO₃ plus water.

The Ca(OH)₂ suspension density depends on the desired form of crystals and varies between 100 and 200 g/l.

The flue gases introduced into the suspension shall undergo preliminary treatment. Hot gases are preliminarily conducted through a three-level venturi tube which cools the gas down to 40°C and in case of gases containing SO₂ removes the latter as well. At transition of the flue gas through the cells only CO₂ reacts with the suspension, whereas the remainder of the flue gas is released.

The continuous precipitated calcium carbonate production equipment consists of an optional number of interconnected reaction cells where the interior of the preceding cell is inlet tube connected with the centrally positioned tube of the following cell, which provides for lime suspension flow through the line without requiring any level difference between cells.

Each reaction cell may be square in shape; it consists of a vessel A and a centrally positioned tube 1 which contains a hollow shaft 2 of the stirring rod provided for introduction of flue gases into the cell.

Upon introduction of calcium hydroxide Ca(OH)₂ through the inlet tube 4 into the first cell of the row and upon the start-up of motors 5 in individual cells, the stirring attachment 3 in the tube 1 creates the negative pressure which causes slight lifting of the suspension level in the cell. Therefore the suspension may flow through the inlet tube 4 of the next reaction cell into the next reaction cell. The suspension flow process in all subsequent reaction cells of the respective row is identical. Successful performance of the procedure requires 10 to 15 reaction cells.

In the first reaction cell of the row and in each subsequent reaction cell the introduced calcium hydroxide reacts with the CO₂ introduced through the shaft 2 in the way to result in gradual production of CaCO₃.

The stirring attachment 3, mounted at the lower end of the shaft 2 disperses the flue gases into small bubbles, which produces some large contact surface between the CO₂ from flue gases and the lime suspension. The CO₂ reacts while the bubbles rise to the surface. The partly precipitated suspension flows into the next reaction cell where the above described procedure is repeated.

The last but one cell contains a pH-meter regulating the inflow of fresh lime suspension.

All reaction cell walls are cooled. The temperature control in the cells influences the crystalline form from calcite to aragonite. Thereafter the obtained carbonate is thickened in several stages; follows precipitation, pressing on filter presses and drying.

The pigment white is over 95 %, measured with reference to the MgO white (DIN 53145-T2D65); 80 % of crystals are of micrometer size.

The continuous precipitated calcium carbonate production equipment referred to in this invention provides for controlled form and size of calcium carbonate crystals, for 50 % reduction of power consumption in reaction cells, for universal application of the equipment as well as for its adaptability in view of lot production and simple increase of production capacities.

## Claims

1. A continuous precipitated calcium carbonate production equipment, where the reaction cell consists of a vessel (A), a centrally positioned tube (1) containing a hollow shaft (2) with a motor (5) mounted on one end and a stirring attachment (3) fixed on the other end,
**characterized in that**
an optional number of reaction cells are interconnected in the way that the vessel (A) of the preceding cell is connected with the centrally positioned tube (1) of the next cell through the inlet tube (4).

2. A continuous precipitated calcium carbonate production equipment according to claim 1, where the number of interconnected reaction cells is 10 to 15.

## Patentansprüche

1. Gerät zur ständig ausfällenden Calciumkarbonat-produktion, in dem die Reaktionszelle aus einem Behälter (A) und einer mittigen Leitung (1) besteht, die einen hohlen Schaft (2) enthält mit einem an einem Ende befestigten Motor (5) und einem am anderen Ende befestigten Rührzusatz (3), **dadurch gekennzeichnet, dass** eine beliebige Anzahl von Reaktionszellen so miteinander verbunden sind, dass der Behälter (A) der vorangegangenen Zelle über die Zuführungsleitung (4) mit der mittigen Leitung (1) der nächsten Zelle verbunden ist.

2. Gerät zur ständig ausfällenden Calciumkarbonat-produktion nach Anspruch 1, in dem die Anzahl der miteinander verbundenen Reaktionszellen 10 bis 15 beträgt.

## Revendications

1. Equipement pour la fabrication continue de carbonate de calcium précipité où la cellule de réaction est constituée d'une cuve (A) , d'un tube (1) positionné de manière centrale et contenant un arbre creux (2) avec un moteur (5) monté sur l'une des extrémités et un accessoire mélangeur (3) fixé sur l'autre extrémité, **caractérisé en ce qu'**une quantité optionnelle de cellules de réaction sont interconnectées de sorte que la cuve (A) de la cellule précédente soit reliée par l'intermédiaire du tube d'entrée (4) avec le tube (1) positionné de manière centrale équipant la cellule suivante.

2. Equipement pour la fabrication continue de carbonate de calcium précipité selon la revendication 1 sur lequel la quantité de cellules de réaction interconnectées est comprise entre 10 et 15.
